# EUROPEAN PATENT SPECIFICATION

(11) **EP 2 260 961 B1**
(45) Date of publication and mention of the grant of the patent: **01.06.2016**
(21) Application number: 08750424.7
(22) Date of filing: 25.03.2008
(51) Int. Cl.: B21J 1/06, B21J 9/02, B21J 13/00, B23D 23/00, B23D 33/02, B23D 33/10, B23P 23/00

(54) **MACHINE FOR THE HOT FORMING OF BRASS PARTS BY MEANS OF STAMPING**
MASCHINE ZUR WARMFORMUNG VON MESSINGTEILEN MITTELS STANZEN
MACHINE DE FORMAGE À CHAUD PAR ESTAMPAGE DE PIÈCES DE LAITON

(43) Date of publication of application: 15.12.2010
(73) Proprietor: Neotecman, S.l., 17460 Celra (Girona) (ES)
(72) Inventor: DOMINGO SULE, Manel, E-17460 Celra (Girona) (ES)
(74) Representative: Morgades y Manonelles, Juan Antonio
(86) International application number: PCT/ES2008/000190
(87) International publication number: WO 2009/118428

(56) References cited:
- ES-U- 1 059 110
- ES-U- 1 059 188
- GB-A- 1 113 048
- US-A- 3 348 441
- US-A- 4 321 818
- US-A- 4 343 209
- US-A- 4 466 266
- US-A- 4 677 838
- US-A- 5 109 740

## Description

As stated in the title, this Patent relates to a hot forming machine for stamping brass parts, providing numerous benefits as described.

### Field of the technique:

More specifically, the invention relates to hot forming machines for stamping brass parts fed with an elongated brass bar and incorporating a cutting device according to the preamble of claim 1 as disclosed by ES1059188U.

### State of the Art:

Conventional hot forming brass stamping parts machines first heat a section of bar previously cut by an independent cutting device, which we will call pre-cut bar segment, and a second operation of forming by stamping.

The brass bar is cut into equal sized sections in an independent cutting device with a blade. This process generates inherent losses of material in the cutting area of between 1-1.5 mm, an important loss of material.

The operation of heating the pre-cut bar segment before its stamping is carried out principally by two different techniques: Induction or gas. None of these two techniques is completely efficient, as the heating of the pre-cut bar segments is not completely homogeneous in the entire volume of the bar.

Another drawback of this type of machine, which is the current state of the art, is that there is also a substantial loss of time in evacuating the pre-cut bar segments from the machine or cutting device and feeding them into the stamping machine, and in addition, a scheduling of the number of pre-cut bar segments to cut is required, so that if there is a defect in the final piece, this would mean the loss of all the series of pre-cut bar segments already cut, which would become rejects.

Conventional hot stamping machines comprise a stamping block formed by a lower and an upper die that are joined together by an assembly to close the die. This assembly for closing the die moves vertically downwards to close the die completely by the action of a cam, which is mechanically linked to a connecting rod that moves the punches of the die forwards or backwards. This mechanical linking between the vertical down/up movement of the closing assembly and the forwards/backwards movement of the punches gives rise to a series of problems, for instance when the pre-cut bar segment is misplaced below the stamping block is locked and the machine stops. In addition, the simultaneous advance of the punches makes it very difficult to adjust the stroke of each of them, as although it is possible to modify their stroke, it is not possible to delay the start times of the punches.

Another of the drawbacks of this type of machine that is state of the art is the existence of burrs on the stamped parts, due to an excess of material on the inside of the die, so that when it closes, part of the material is projecting. The existence of burrs in a stamped part makes it necessary to include another operation at the end of the cutting process to remove the undesired burrs, which implies a significant use of time.

There are also cutting devices that have been incorporated into the hot stamping machine, as described in the US patent No. US-A-5,690,010, formed by a circular grooved blade that cuts cold. Nonetheless, in this case there are also inherent losses of material in the cutting area of between 1-1.5 mm.

### Purpose of the Invention:

The present invention aims to provide a forming machine by hot stamping of brass parts that incorporates an efficient cutting device, whose main features are that the losses of material when cutting the brass bar are minimal, that the final stamped parts have no burrs, that the manufacturing times are much shorter in comparison to conventional machines, and that the time taken to change moulds is much shorter than conventional machines.

The hot forming machine for stamping brass parts object of the invention comprises the features of claim 1.

One of the features of this machine is that before the brass bar cutting operation, the bar is pre-heated in an oven with a common chamber containing a series of burners, that heat the bar progressively, which achieves on the one hand an improvement in the shearing process, as the formation of metal shavings is reduced, and on the other, a better traceability and control of the final stamped piece.

The brass bars are heated in an oven with a common open chamber with a series of burners, adapted to heat all the bars progressively, so that the bar ready to be fed into the cutting device is the hottest, and thus successively.

The oven is a chamber open at the front with a capacity for 5-15 bars inside, placed beside each other on the oven tray. The burners are at the front of the oven and facing inwards, distributed along the oven. The front base of the oven has an exit orifice, through which the heated bar is evacuated to the cutting device.

Progressive heating of the bars is achieved by the distribution of temperatures as a result of different burner flame temperatures, which are programmed at different temperatures by means of electrical or electronic controls that adjust the flame temperature of each burner.

This temperature distribution in the oven chamber will be longitudinal inside the oven from greater to lesser, starting with the burner closest to the cutting station up to the farthest. In addition, thanks to the configuration of the oven chamber, open at the front, the distribution of temperatures in the transversal direction will be that of greater temperature at the rear of the oven and less at the front. Then, the bar, which is located in the rearmost position on the oven tray is ready to be fed to the cutting device and will also be the hottest, and in turn the front of the bar will be hotter than the back.

The bars are heated by convection with the air, which is heated by the burners, something that significantly improves the homogeneity in the heating of the entire volume of the brass bars.

In accordance with the invention, the oven has four different sectors, in each of which there can be two burners with a different flame temperature, so that the longitudinal distribution of temperatures in the oven will be from less to more starting with the burner closest to the cutting station up to the most distant. The common chamber of the oven has a tray on which the brass bars rest, two side walls, one wall rear, and one roof, and this chamber is supported by two vertical supports that rest on and are immobilised on a bench. The average temperature of the oven will be preferably about 800°C.

The oven incorporates a ramp for feeding, on the outside of the oven, where an amount of bars are stored manually or automatically, which is slightly sloping towards the oven tray and has some stops inside to stop the bars falling. This ramp is sloping forward causing the first bar to surpass the stop and fall into the oven tray by the action of a piston, which has the mission of tipping the ramp forwards/backward to provoke the fall of the first bar by gravity.

The feeding of an new bar in the oven tray is a totally automated operation, as once the rear bar has left the oven by its front, an order is sent to the ramp piston to tip the ramp and the first bar on the ramp will fall, therefore the bar that was located at the rear of the oven tray is pushed by the next bar to occupy the position of rearmost bar.

A pusher is used to move the rearmost bar to the cutting device, which is designed to press the rear part of the rearmost bar, and thereby make it move forward gradually. This pusher is linked to a belt that is located along a longitudinal guide, and driven by a servomotor or a pneumatic piston that controls the torque and force of the pusher.

The advantageous configuration of the open chamber oven implies a great saving of energy, up to four times less than conventional induction or gas ovens.

In addition, there are temperature probes in each of the oven chambers to measure the temperatures inside the chambers.

Additionally, it will incorporate another temperature probe for the surface of the bar just before reaching the exit orifice of the oven, which uses laser technology.

The cutting device is a shear, which has a vertical block that is placed just after the exit of the oven, through which it is fed with the preheated bar, and this vertical block incorporates a blade or guillotine that rises /falls by the action of a piston. In the same direction of the bar, but a certain distance away from its front there is a feeler element, placed horizontally, which is designed to move forward and contact the front of the heated bar, cut at the pre-established length, and then, with the guillotine located above the bar it rises and falls rapidly, carrying out the transversal cut.

Once cut, the feeler moves back to enable the pre-cut bar segment to advance towards the stamping assembly.

To adjust the distance the feeler moves forward and therefore the length of the cut bar of pre-heated brass, there is an adjustment wheel, which when turned, adjusts the distance of the cut.

The means to move the pre-cut bar segment comprise a moving carriage driven by a servo-motor, which moves transversally to the entry direction of the pre-heated brass bar to the shear, and is adapted to hold the pre-cut bar segment that has just been cut and move it to the position just above the lower die, so that when it falls by gravity it is perfectly positioned in the hollow it contains. The moving carriage incorporates a positioner arm that has in its free end a half-moon shaped hollow, whose diameter corresponds to the diameter of the pre-cut bar segment, which is adapted for holding the pre-cut bar segment in the hollow and securing it with a pawl and a spring.

The means for stamping comprise a stamping assembly formed by an upper die and a lower die that fit together wherein the pre-cut bar segment is stamped, and a bracket piece in the area between the upper and the lower dies and placed horizontally and at the same height as the positioner arm. This bracket piece also has in its free end a half-moon shaped hollow space with the same diameter as the pre-cut bar segment. This bracket moves in transversal direction thanks to the action of a piston.

The pre-cut bar segment is positioned in the lower die as follows: when the positioner arm with the pre-cut bar segment secured by the pawl makes contact with the aforementioned bracket, the two half-moons fitting together with the pre-cut bar segment in the middle, then the pawl retracts and the pre-cut bar segment falls by gravity just over the lower die.

The lower die of the stamping block has three punches to stamp more complex parts. In the three-punch die, they are placed in horizontal position, two of which will be located in the same direction and opposite each other and the other will be placed at 90°, and the moving carriage does not turn.

Another feature of this invention is that the assembly for closing the die, namely all the upper block of the stamping assembly (which includes the mould holder and the upper die) falls/rises by the action of a vertical hydraulic motor, so this vertical closing movement is independent of the movement forwards to the centre of the lower die of punches. Some independent hydraulic motors that regulate the pressure and the force of each of the punches will produce these forward movements of the punches.

Thanks to this independence of movements between the closing assembly and the advance of the punches, the closure of the upper die with the lower die is perfect, and thus the forming of a burr in the stamped part is avoided and the subsequent process to remove the burr can be eliminated. Thanks to this independence of movements, if there are three punches, their advance may be delayed by a certain time T1, so that punch a will start at time T1, the next punch at time t2 and the last punch at time t3 through automatic controls for delaying the start of the punches (t1, t2, t3) and of the speed of movement forward (v1, v2, v3) of each of the punches, in accordance with the specific configuration of the piece to be stamped.

Another advantage of the stamping assembly of this invention is that the distance covered by the punches (d1, d2, d3) can also be adjusted very easily and quickly by the user, as there is a mechanical stop that determines the end of the stroke of each of the punches, and this mechanical stop can be moved by the user, taking less than one minute.

Thanks to this particular configuration of the stamping block, the time needed to change moulds and to prepare the machine are drastically reduced in comparison to conventional machines.

Regarding the means to expel the stamped piece, they comprise some ejectors located in the lower die, whereas the upper die has an adhesive surface that is adapted so that the stamped piece adheres to the upper part for ejection. These ejectors project slightly, a few millimetres above the surface of the lower die, and when the upper die descends, the ejectors descend and are hidden. The collector arm is positioned under the upper die, and once the stamped piece is secured by the upper die, by gravity the stamped piece will fall on to the collector arm, which moves towards an evacuation ramp by means of automatic movement devices and then it lets the stamped pre-cut bar segment fall onto this evacuation ramp. These automatic means of movement of the collector arm are preferentially a cylinder.

The evacuation ramp by the force of gravity leads the final stamped parts outside the machine, where they are stored, for instance in a container.

To adjust the settings of the machine described in this invention, for stamping a new series of parts that have a different bar diameter than the previous series, the oven has automatic means of longitudinal movement and also of automatic means of vertical movement, and the shear assembly has automatic means for vertical movement. These means of movement of the assemblies that make up the machine object of this invention regarding the bench may be motors or pistons controlled by means of control. This freedom of movements of the assemblies that make up the Machine Object of the invention allow the Machine to be adjusted quickly and effectively by the user for a new series of parts.

Another benefit of the machine described herein is that it may easily be moved from one place to another, as it does not require a pit in the floor for the press cushion, as the stamping assembly works by the action of a vertical hydraulic motor.

The machine incorporates means for cooling the mould holders, formed by passageways through which oil or a similar fluid circulates, so that by contact the lower and upper dies are also cooled.

The machine also incorporates means for automatic lubrication of the lower and upper dies by the dosed application of graphite oil, which is fitted to the bracket piece and supplies to the lower die just before the positioner arm frees the pre-cut bar segment onto it, and then it is applied to the upper die. Thereby, the bracket piece has the double mission of helping with the positioning of the pre-cut bar segment in the lower die and with the lubrication of the die.

The machine also incorporates some means to control the machine's parameters, such as the temperature inside the oven chambers, the surface temperature of the brass bar just before being cut, the delay times of the punches, or the speed of advance of the punches. These means of control are formed by an automaton adapted to modify the parameters of the machine, which is connected to a communicator, such as a PC, which is adapted to transmit the functions chosen by the user to the automaton.

The oven, the shear assembly, the movement assembly and the stamping assembly, which comprise the main parts of the machine referred in the present invention, are fitted onto a bench, formed by a flat structure placed horizontally on the ground, which is composed of crossbeams joined to each other by means of multiple cross members. There are means to anchor the bench to the floor, preferably multiple plates incorporating anchoring bolts to secure the bench to the floor. This bench incorporates an upper structure, adapted to hold the stamping assembly in vertical position. This upper structure will be preferably made up of vertical sections attached to the cross members of the bench, which support on their upper ends a flat upper structure in horizontal position. On the front of the vertical sections, the stamping assembly is rigidly secured in vertical position.

The machine will also include the corresponding safety screens in the shear area, the movement assembly and the stamping assembly.

### Description of the drawings:

Figure 1 is a perspective view of a preferred embodiment of the hot forming machine for stamping brass parts object of the invention.
Figure 2 is another perspective view of the preferred embodiment of the hot forming machine for stamping brass parts of figure 1.
Figure 3 is a perspective view of the oven of figure 1.
Figure 4 is another perspective view of the oven of figure 1.
Figure 5 is a perspective view of the stamping assembly of figure 1.
Figure 6 is another perspective view of the stamping assembly of figure 1.
Figure 7 is a perspective view of the shear assembly and the movement assembly of figure 1.
Figure 8 is another perspective view of the shear assembly and the movement assembly of figure 1.

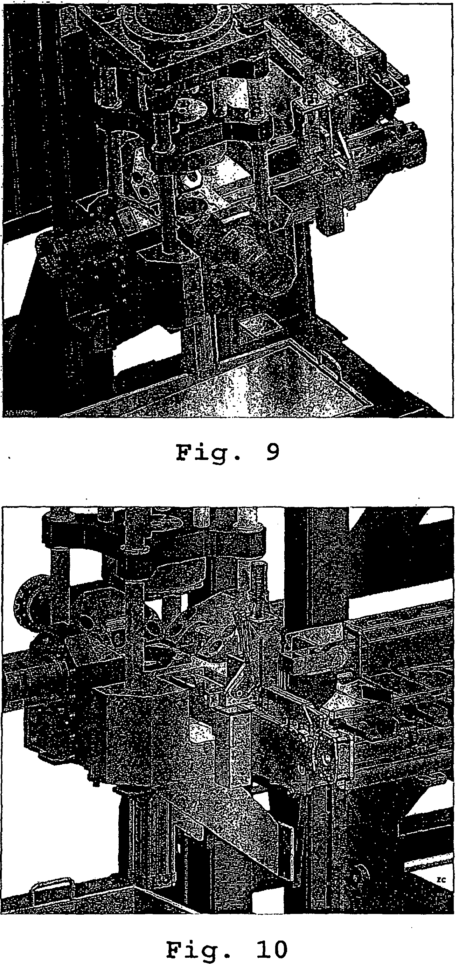

Figure 9 is a detail view of the stamping assembly, the movement assembly and the shear assembly of figure 1.
Figure 10 is another detail view of the stamping assembly, the movement assembly and the shear assembly of figure 1.

### Forum of a preferred embodiment of the invention:

Below is a numbered list of the different parts that make up the hot forming machine for stamping brass parts depicted in the illustrations: (10) machine, (11) bench, (12) oven, (13) shear assembly, (14) hot stamping assembly, (15) movement assembly, (16) burners, (17) feeding ramp, (18) Sub-chambers, (19) oven roof, (20) side walls, (21) output orifice, (22) oven supports, (23) oven tray, (24) ramp stops (17), (25) ramp pistons (17), (26) belt, (27) guillotine, (28) piston of guillotine, (29) feeler, (30) wheel for adjusting the feeler (29), (31) moving carriage, (32) positioner arm, (33) moving carriage cylinder (31), (34) vertical hydraulic motor, (35) hydraulic motors for moving the punches (52), (36) lower die, (37) upper die, (38) mould-holder, (39) brass bars (40) pre-cut bar segment, (41) ejector assembly, (42) pusher, (43) guide, (44) shear assembly vertical block (13), (45) heated bar, (46) oven supply valves (12), (47) oven rear wall, (48) oven chamber, (49) hollow in the positioner arm (32), (50) positioner arm pawl (32), (51) bracket piece of the stamping assembly (14), (52) lower die punches (36), (53) closing assembly, (55) ejectors, (56) collector arm, (57) evacuation ramp, (58) bench crossbeams (11), (59) bench cross members (11), (60) plates, (61) anchoring bolts, (62, 63) vertical sections, (64) upper structure, (65) supports for anchoring the stamping assembly (14), (66) formed pre-cut bar segment.

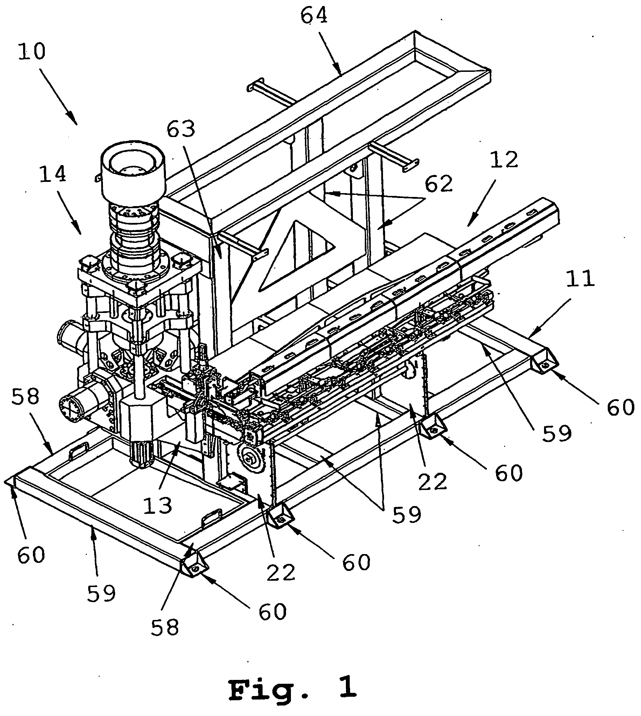

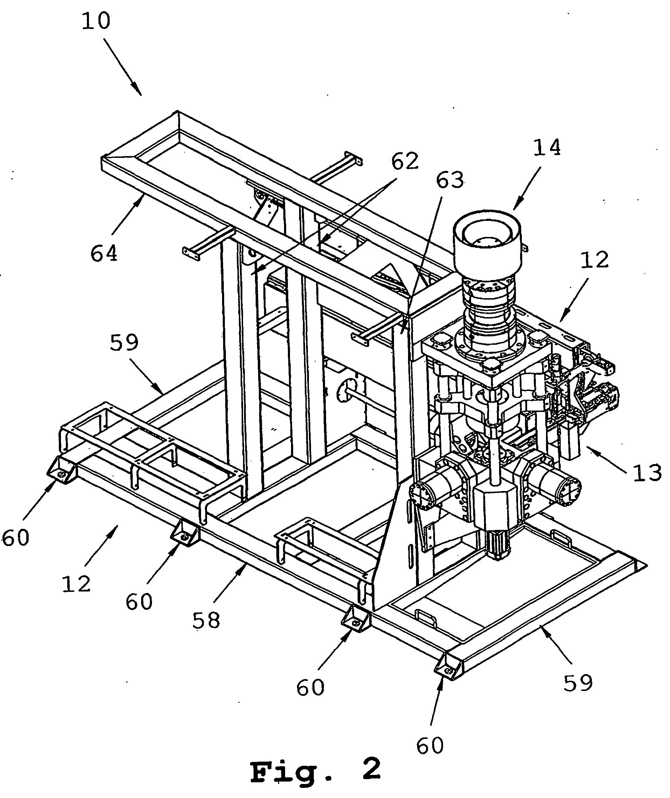

According to a preferred embodiment of the invention, and as shown in figures 1 and 2, the hot forming machine for stamping brass parts (10) comprises essentially a oven (12) designed to heat brass bars (39) progressively so that the temperature of the front end of the brass bar (39) when entering the shear (13) is between 700°C and 900°C, a shear assembly (13) designed to cut transversally a preheated brass bar forming pre-cut bar segments (40) of a predetermined length, a movement assembly (15) designed for moving the pre-cut bar segment (40) to the lower die (36), a hot stamping assembly (14) designed to stamp the pre-cut bar segment (40) with a certain configuration, and a ejector assembly (41) designed to eject the formed pre-cut bar segment (66) outside the machine. (10), all fitted onto a bench (11).

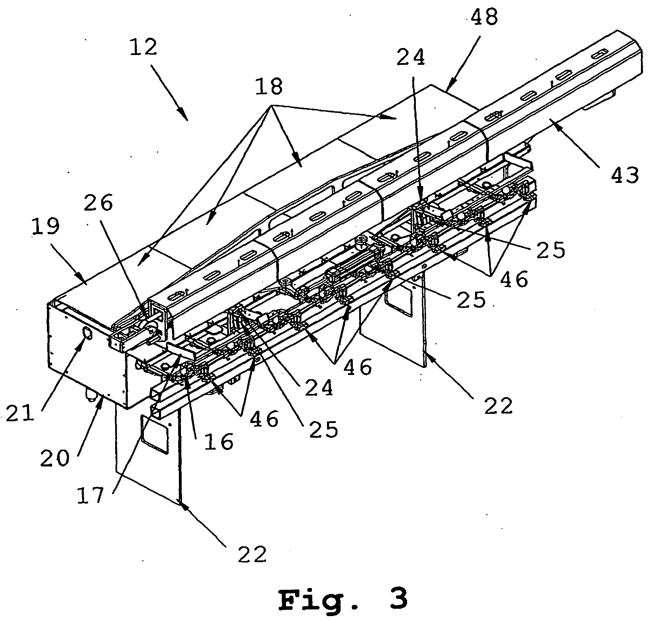

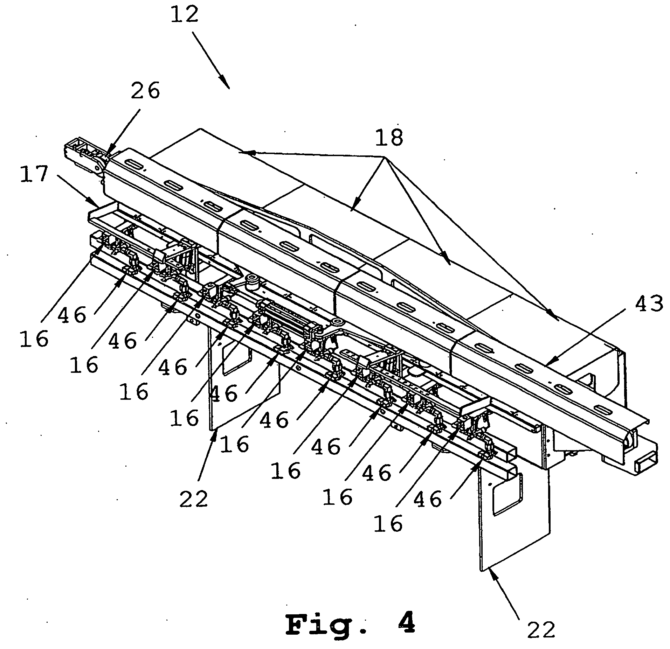

As shown in figures 3-4, the oven (12) is formed by four sub-chambers (18) that make up a common chamber (48) open at the front with a capacity for 5-15 bars (39) inside (preferably 8 bars), which are placed next to each other on the oven tray (23). The chamber (48) of the oven (12) will have a tray (23) on which the brass bars (39) rest, two side walls (20), one wall rear (47), and one roof (19), and this chamber (48) is supported by two vertical supports (22) that rest on the bench (11).

The burners (16) are placed at the front of the chamber (48) of the oven (12) and they are facing inside, distributed along the oven (12), being designed to heat all the bars (39) progressively, so that the bar that is ready to be fed to the cutting device is the hottest, and thus successively. These burners (16) are connected to supply valves (46) that regulate the flow of fuel.

In front side wall of the oven (12) there is an output orifice (21) through which the heated bars are progressively expelled (45) to the shear (13).

In each of the four sub-chambers or sectors (18) there are two burners (16) with flames of different temperatures, so that the distribution temperatures in the longitudinal direction of the oven (12) will be from higher to lower, starting with the burner closest to the shear (T1) up to the one located furthest (T8), being T1>...Ti...>T8. Hence, the distribution of temperatures inside the chamber (48) of the oven (12) will be longitudinal, from higher to lower starting with the burner located closest to the cutting station up to the one farthest away, and in turn the distribution of temperatures transversally will be of greater temperature at the rear of the chamber (48) of the oven (12) and less at the front.

The oven (12) has a feeding ramp (17) placed outside the oven (12) and with capacity for a certain number of bars (39); it is slightly sloping towards the oven tray (23) and has stops (24) inside to avoid the bars falling (39). There are some pistons (25) connected to the feeding ramp (17), to tilt it (17) and thus force the first bar to fall by gravity towards the oven tray (23).

The bar is pushed automatically towards the shear (13) by a pusher (42), not shown in the drawings, which is designed to press the rear of the bar, and thereby make it move forwards progressively. This pusher (42) is linked to a belt (26) that is located along a longitudinal guide (43), and driven by a servomotor or a pneumatic piston that controls the torque and force of the pusher (42).

The oven (12) will have means for automatic movement longitudinally and also vertically regarding the bench (11), which will guarantee the machine's setting (10) if the diameter of the input brass bar is modified. These means for automatic movement of the oven (12) in two directions comprise a controlled motor or a piston, and rails on the bench (11) to guide the movements.

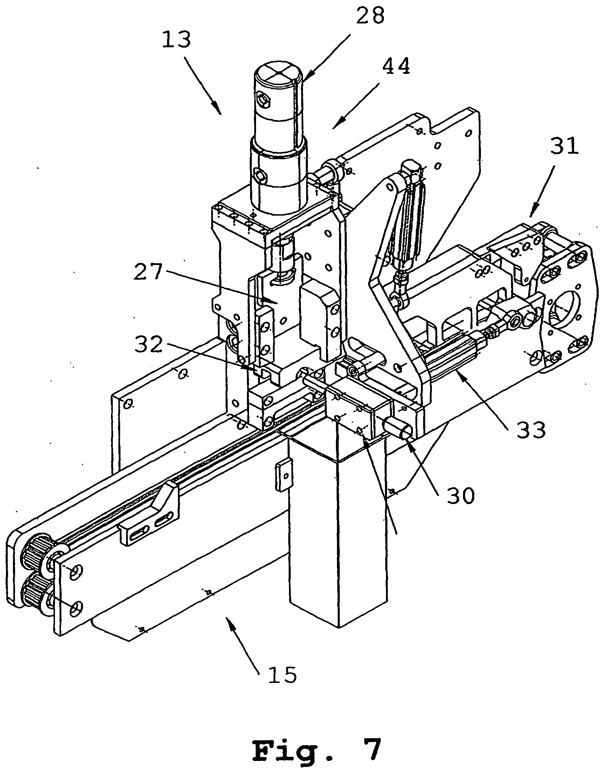

As may be seen in Figures No. 7-8, the shear assembly (13) is formed by formed a vertical block (44), which is placed just after the output orifice (21) of the oven (12) through which the pre-heated bar is fed. This vertical block (44) incorporates a guillotine (27) that descends and returns to its initial position by the action of a piston (28).

In the same direction as the heated bar (45) but at a certain distance from its front there is a feeler (29) in horizontal position, which is designed to move forward until it makes contact with the front of the heated bar (45) at the pre-established cutting length, and then, with the guillotine (27) located above the heated bar (45) the guillotine falls and rises quickly, producing the transversal cut of the heated bar (45), thus producing the pre-cut bar segment (40). Once the cut has been made, the feeler (29) moves backwards again to allow the pre-cut bar segment (40) to move to the hot stamping assembly (14).

There is an adjustment wheel (30), which by turning -a predetermined distance- sets the distance of the feeler (29) regarding the output orifice (21), and thus the cut length of the heated bar (45).

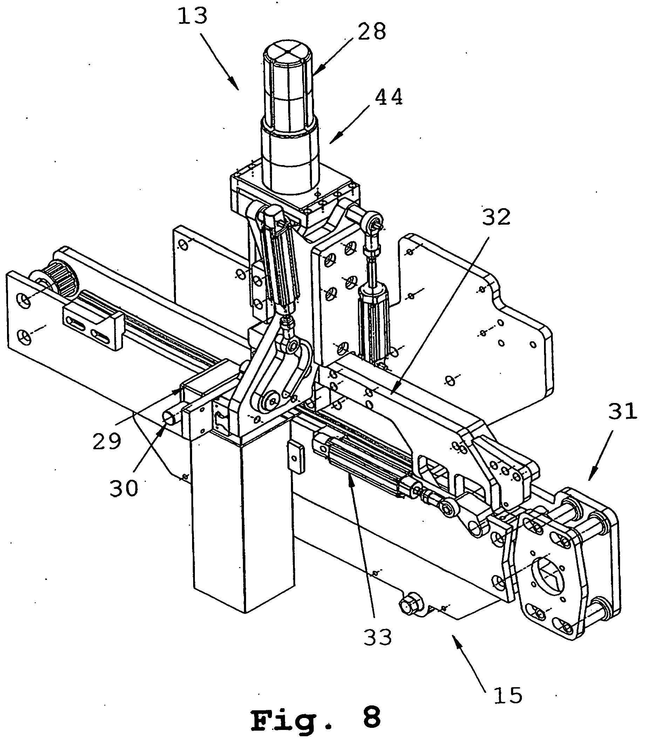

As can be seen in Figures 7 and 8, the movement assembly (15) of the pre-cut bar segment is formed by an elongated moving carriage (31) driven by a servo-motor, which moves in transversal direction to that of entry of the heated bar (45) to the shear assembly (13), and it is designed to hold the pre-cut bar segment (40) that has just been cut and move it to a position just above the lower die (36), so that when the pre-cut bar segment (40) falls by gravity, it is perfectly positioned in the hollow of the die. The moving carriage (31) incorporates an positioner arm (32) that has in its free end a half-moon shaped hollow, whose diameter corresponds to the diameter of the pre-cut bar segment (40), which is adapted for holding the pre-cut bar segment in the hollow and securing it with a pawl and a spring.

The aforementioned moving carriage (31) incorporates automatic means for turning, adapted to turn the carriage 90° and thus position the pre-cut bar segment (40) in position on the lower die (36). These automatic means for turning will be activated only when the lower die (36) of the stamping assembly (14) has a single punch (52).

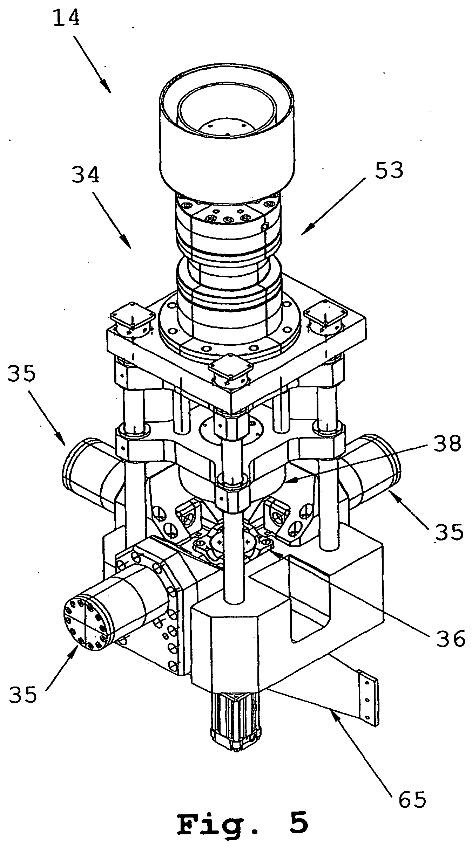

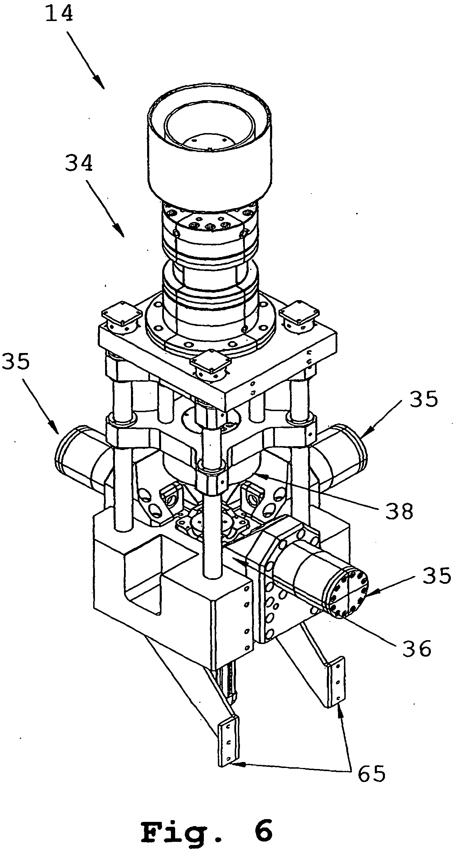

As can be seen in figures No. 5 and 6, the stamping assembly (14) comprises essentially an upper die and a lower die (36) which fit into each other, and a bracket piece in the intermediate area between the two dies (36) and in horizontal position and at the same height as the positioner arm (32).

This bracket, not shown in the illustrations, also has in its free end a half-moon shaped hollow with the same diameter as that of the pre-cut bar segment (40). This bracket moves in transversal direction thanks to the action of a piston and is designed to move until it makes contact with the front base of the positioner arm (32) of the moving carriage (31) and thus cause the extraction of the pawl of the positioner arm (32) and then cause the fall of the pre-cut bar segment (40) onto the lower die (36).

This lower die (36) of the stamping assembly (14), in this case, has three punches (52) placed on the same horizontal plane -two of which are located in the same direction and opposite one another and the last is at an angle of 90°-, so as to be able to stamp complex configurations. In this case, the moving carriage (31) will not make a 90° turn to position the pre-cut bar segment (40) on the lower die (36).

The closing assembly (53) of the stamping assembly (14) is driven by a vertical hydraulic motor (34), which generates the vertical up/down movement of the closing assembly (53), which includes the mould-holder (38) and the upper die.

The movement forward of the punches (52) to the centre of the lower die (36) is carried out by the action of independent hydraulic motors (35), that adjust the pressure and the force of each of the punches (52).

The user can program two different parameters of the punches (52) according to the configuration of the piece to be stamped, and a different value for each punch (52): the delay times (t1, t2, t3) and the forward speed (v1, v2, v3) of the stamping operation, and the user can physically modify the distances to be covered (d1, d2, d3) using a mechanical end of travel stop provided in each punch (52).

The ejector assembly of the stamped piece, not shown in the drawings, comprises ejectors in the lower die (36), whereas the upper die has an adhesive surface designed to hold the stamped piece for its expulsion. There is a collector arm positioned under the upper die, and once the stamped piece is secured to the upper die, by gravity the stamped piece will fall onto the collector arm, which moves to an evacuation ramp, where the collector arm lets the stamped piece fall.

This evacuation ramp is sloping, so that the final stamped parts move out of the machine by gravity (10), being stored in a container, for example.

The shear assembly (12) and movement assembly (15) will have means of automatic vertical movement regarding the bench (11), which guarantee the adjustment of the machine (10) if the diameter of the input brass bar is modified. These have means of automatic movement of the shear and movement assemblies (12, 15) and comprise a controlled motor or piston.

The oven (12), the shear assembly (13), the movement assembly (15) and the stamping assembly (14), which comprise the main parts of the machine referred in the present invention, are fitted onto a bench (11), see figures 1 and 2, formed by a flat structure placed horizontally on the ground, which is composed of crossbeams (58) joined to each other by means of multiple cross members (59). The crossbeams (58) incorporate a multitude of plates (60), which in turn incorporate anchoring bolts (61) to secure the bench (11) to the floor. The lower base of the oven (12) supports (22) are securely fitted to the cross members (59). On two of the cross members (59) of the bench (11) the vertical sections are secured (62, 63), they support an upper structure (64) on their ends. The stamping assembly (14) is securely fitted to the front of the vertical sections (63) in vertical position by means of anchoring supports (65) on the lower side of the stamping assembly (14), see figure 6. These anchoring supports (65) are designed to be secured by conventional means of anchoring on the front of the vertical sections (62, 63) of the bench (11), and thus secure the stamping assembly (14) in vertical position.

Having described this invention in sufficient detail with the attached diagrams for this invention and not being restricted to the same, this description is for information and illustrative purposes but does not limit the same whenever the scope of the claims are met.

## Claims

1. Machine for the hot forming of brass parts by means of stamping fed by an elongated brass bar, cut into sections of bar of the same length called pre-cut bar segments, the hot forming machine (10) comprising the following components:
- an oven assembly (12) designed to heat a collection of brass bars progressively so that the temperature of the front end of a brass bar entering a shear assembly (13) is 700°C-900°C, the oven (12) formed by four sub-chambers (18) that make up a common chamber (48) open at the front for the entrance of the bars, the chamber (48) also having a tray on which the brass bars rest, two side walls (20), one wall rear (47), and means for automatically pushing a brass bar to the shear (13);
- the shear assembly (13) designed to transversally cut the preheated brass bar to form pre-cut bar segments of a predetermined length, said shear assembly incorporating a feeler device (29) placed in the same direction as the heated bar but at a certain distance at its front and in horizontal position;
- a movement assembly (15) designed to move the pre-cut bar segment to a lower die (36), and formed by an elongated moving carriage (31) driven by a servo-motor, which moves transversally to the direction of input of the heated bar to the shear assembly (13);
- a hot stamping assembly (14) designed to stamp the pre-cut bar segment with the predetermined configuration, comprising a closing assembly (53), an upper and the lower die (36) which fit into each other, the lower die (36) has three punches (52) placed on the same horizontal plane which move forward by the action of independent hydraulic cylinders (35), that regulate the pressure and strength of each of the punches (52) individually; and
- an ejector assembly designed to eject the formed piece outside the machine (10); all fitted onto a bench (11) anchored to the floor, **characterised by** the fact that:
- the hot stamping assembly (14) comprising a closing assembly (53) driven by a vertical hydraulic cylinder (34), which generates the vertical up/down movement of the closing assembly (53),
- the oven (12) incorporates burners (16) placed at the front of the common chamber (48) of the oven (12), facing inside and distributed along the oven (12), designed to heat all the bars progressively, so that the bar that is ready to be fed to the shear (13) is the hottest, and thus successively, the burners (16) are connected to valves (46) that regulate the flow of fuel, and there are electrical or electronic means to control the flame temperature of each of the burners (16), and the oven (12) has a feeding ramp (17) placed outside the oven (12) and with capacity for a certain number of bars; it is slightly sloping towards the oven tray and has stops (24) inside to avoid the bars falling; there are some pistons (25) connected to the feeding ramp (17), which are adapted to tilt said feeding ramp and thus force the first bar to fall by gravity towards the oven tray,
- the feeler device (29) of the shear assembly (13), adapted to move forward until it comes into contact with the front of the heated bar at the pre-established cut length, and to moves backwards again when the cut has been made, to enable the pre-cut bar segment to move to the hot stamping assembly (14),
- the moving carriage (31) incorporates a positioner arm that has in its free end a half mood shaped hollow (49) whose diameter corresponds to the diameter of the pre-cut bar segment, which is adapted for holding the pre-cut bar segment in the hollow (49) and securing it with a pawl and a spring, and
- the ejector assembly for the stamped piece comprises ejectors in the lower die (36), while the upper die has an adhesive surface designed to secure the stamped piece for its expulsion, the ejector assembly also has a collector arm, which is positioned under the upper die, designed so that once the stamped piece is attached to the upper die, it will fall onto the collector arm, which moves towards the evacuation ramp thanks to means for automatic movement, and lets the stamped pre-cut bar segment fall onto this ramp.

2. Machine according to claim 1, **characterised by** the fact that the oven (12) is suitable for achieving an average temperature of 800°C.

3. Machine according to claim 1, **characterised by** the fact that the oven (12) has a capacity for 5-15 bars inside, placed beside one another on the oven tray, preferably the oven tray can hold 8 brass bars.

4. Machine according to Claim 1, **characterised by** the fact that in front side wall of the oven (12) there is an output orifice (21) through which the heated bars are progressively expelled to the shear (13).

5. Machine according to claim 1, **characterised by** the fact that the oven (12) have means for automatic movement longitudinally and also vertically regarding the bench (11), which will guarantee the machine's setting (10) if the diameter of the input brass bar is modified.

6. Machine according to claim 1, **characterised by** the fact that the shear assembly (13) is formed by a vertical block (44) which is located just after the output orifice (21) of the oven (12) by which it is fed with the preheated bar, this vertical block incorporates (44) a shear or guillotine (27) that falls and returns to its initial position by the action of a piston (28), the feeler device (29) has a wheel for adjustments setting (30) which by turning a predetermined distance adjusts the distance of the feeler (29) with regard to the output orifice (21), and thus the length of the pre-heated bar.

7. Machine according to claim 1, **characterised by** the fact that the movement assembly (15) of the pre-cut bar segment is adapted to hold the pre-cut bar segment that has just been cut and move it to the position just above the lower die (36), so that when the pre-cut bar segment falls by gravity, it is perfectly positioned in the hollow in the die, the moving carriage (31) incorporates automatic means for turning, adapted to turn the carriage 90° and thus position the pre-cut bar segment in position on the lower die (36).

8. Machine according to claim 1, **characterised by** the fact that the shear assembly (12) + movement assembly (15) will have means of automatic vertical movement regarding the bench (11), which guarantee the adjustment of the machine (10) if the diameter of the input brass bar is modified.

9. Machine according to claim 1, **characterised by** the fact that there are means for cooling the mould holders (38) formed by passageways inside which there circulates oil or a similar fluid, so that by contact the lower (36) and upper dies of the stamping assembly (14) are also cooled.

10. Machine according to claim 1, **characterised by** the fact that there are means to automatically lubricate the lower (36) and the upper die by the application of dosed graphite oil, which are fitted onto the bracket, supplied to the lower die (36) just before the positioner arm releases the pre-cut bar segment onto it, and it is then applied to the upper die; and there are means to control the parameters of the machine. (10), such as the interior temperature of the chambers in the oven, the surface temperature of the brass bar just before being cut, the delay times of the punches (52), or the movement speed of the punches (52), these means of control comprise an automaton designed to modify the parameters, which is connected to a communicator that is designed to transmit the functions chosen by the user to the automaton.

## Patentansprüche

1. Maschine zum Warmumformen von Messingteilen durch Pressen mit Zuführung einer langen Messingstange, die in gleich lange Abschnitte, auch vorgestanzte Stangensegmente genannt, zerteilt wird, wobei die Warmumformmaschine (10) folgende Bauteile umfasst:
- eine Ofenanordnung (12) zum progressiven Erwärmen einer Reihe von Messingstangen, sodass die Temperatur am vorderen Ende einer Messingstange bei deren Einfahren in eine Scheranordnung (13) 700°C-900°C beträgt, wobei der Ofen (12) aus vier Teilkammern (18) besteht, die zusammen eine gemeinsame Kammer (48) bilden, die zum Einfahren der Stangen an der Vorderseite offen ist, wobei die Kammer (48) ebenfalls eine Wanne, auf der die Messingstange aufliegt, zwei Seitenwände (20), eine Rückwand (47) sowie Mittel zum automatischen Einschleusen einer Messingstange in eine Schervorrichtung (13) umfasst;
- die Scheranordnung (13) zum Querschneiden der vorgewärmten Messingstange, um vorgestanzte Stangensegmente in einer vordefinierten Länge zu erhalten, wobei die Scheranordnung eine Fühlereinrichtung (29) umfasst, die in derselben Richtung wie die erwärmte Stange angeordnet ist, jedoch mit einem gewissen Abstand zur Vorderseite und in horizontaler Lage;
- eine Verfahranordnung (15) zum Verfahren des vorgestanzten Stangensegments zu einem Untergesenk (36), wobei die Anordnung aus einem länglichen von einem Servomotor angetriebenen Verfahrschlitten (31) besteht und sich quer zur Einführrichtung der erwärmten Stange in die Scheranordnung (13) bewegt;
- eine Warmpressanordnung (14) zum Pressen des vorgestanzten Stangensegments mit einer vordefinierten Formgebung, bestehend aus einer Schließanordnung (53), einem Ober- und einem Untergesenk (36), die sich ineinander einfügen, wobei das Untergesenk (36) drei Stanzstempel (52) aufweist, die auf derselben horizontalen Ebene angeordnet sind und sich durch die Wirkung von unabhängigen Hydraulikzylindern (35), die den Druck und die Kraft jedes Stanzstempels (52) individuell regulieren, vorwärts bewegen; und
- eine Auswerfanordnung zum Auswerfen des Formstücks aus der Maschine (10); wobei dies alles auf einem im Fußboden verankerten Maschinenbett (11) montiert ist, **dadurch gekennzeichnet, dass**:
- die Warmpressanordnung (14) eine Schließanordnung (53) umfasst, die von einem vertikalen Hydraulikzylinder (34) angetrieben wird, der die senkrechte Auf- und Abbewegung der Schließanordnung (53) erzeugt,
- der Ofen (12) Brenner (16) umfasst, die an der Vorderseite der gemeinsamen Kammer (48) des Ofens (12) angeordnet sind, nach innen zeigen und entlang des Ofens (12) verteilt sind, um alle Stangen progressiv zu erwärmen, nämlich so, dass die Stange, die bereit ist, um der Schervorrichtung (13) zugeführt zu werden, am heißestens ist, und dementsprechend werden die Brenner (16) der Reihe nach an Ventile (46) angeschlossen, die den Brennstoffzufluss regulieren, wobei auch elektrische oder elektronische Mittel zur Regulierung der Flammentemperatur der einzelnen Brenner (16) vorhanden sind und wobei der Ofen (12) eine Zuführrampe (17) besitzt, die außerhalb des Ofens (12) platziert ist und eine bestimmte Anzahl an Stangen aufnehmen kann; sie fällt leicht zur Ofenwanne hin ab und ist innen mit Anschlägen (24) versehen, die ein Herausfallen der Stangen verhindern; an die Zuführrampe (17) sind einige Kolben (25) angeschlossen, die zur Neigung der Zuführrampe dienen, sodass die erste Stange mittels Schwerkraft in Richtung der Ofenwanne gleitet,
- die Fühlervorrichtung (29) der Scheranordnung (13) so gestaltet ist, dass sie sich vorwärts bewegt, bis sie mit der Vorderseite der erwärmten Stange an der vorgegebenen Schnittlänge in Berührung kommt, und sich nach erfolgtem Schnitt wieder rückwärts bewegt, sodass sich das vorgestanzte Stangensegment zur Warmpressanordnung (14) bewegen kann,
- der Verfahrschlitten (31) einen Positionierarm umfasst, der an seinem freien Ende eine halbmondförmige Vertiefung (49) aufweist, deren Durchmesser dem Durchmesser des vorgestanzten Stangensegments entspricht und der dafür bestimmt ist, das vorgestanzte Stangensegment in der Vertiefung (49) zu halten, wobei es mit einer Klinke und einer Feder gesichert ist, und dadurch, dass
- die Auswerfanordnung für das Pressteil Auswerfer im Untergesenk (36) umfasst, während das Obergesenk eine Haftfläche aufweist, die zur Sicherung des Pressteils bei dessen Auswerfen dienen, wobei die Auswerfanordnung auch einen Auffangarm aufweist, der sich unter dem Obergesenk befindet und so gestaltet ist, dass, sobald das Pressteil am Obergesenk haftet, es auf den Auffangarm fällt, der sich dank automatischer Verfahrmittel zur Auslauframpe bewegt und das vorgestanzte Stangensegment auf diese Rampe fallen lässt.

2. Maschine nach Anspruch 1, **dadurch gekennzeichnet, dass** der Ofen (12) geeignet ist, eine durchschnittliche Temperatur von 800°C zu erreichen.

3. Maschine nach Anspruch 1, **dadurch gekennzeichnet, dass** der Ofen (12) ein inneres Fassungsvermögen für 5-15 Stangen besitzt, die nebeneinander auf der Ofenwanne liegen, wobei die Ofenwanne vorzugsweise 8 Messingstangen aufnehmen kann.

4. Maschine nach Anspruch 1, **dadurch gekennzeichnet, dass** sich an der Vorderwand des Ofens (12) eine Austrittsöffnung (21) befindet, durch welche die erwärmten Stangen nach und nach zur Schervorrichtung (13) ausgestoßen werden.

5. Maschine nach Anspruch 1, **dadurch gekennzeichnet, dass** der Ofen (12) Mittel für das automatische Ausführen einer Längsbewegung und auch einer Senkrechtbewegung in Bezug auf das Maschinenbett (11) besitzt, wodurch bei verändertem Durchmesser der zugeführten Messingstangen die richtige Maschineneinstellung (10) gewährleistet bleibt.

6. Maschine nach Anspruch 1, **dadurch gekennzeichnet, dass** die Schervorrichtung (13) aus einem vertikalen Block (44) besteht, der sich genau hinter der Austrittsöffnung (21) des Ofens (12), durch die sie mit den vorgewärmten Stangen beschickt wird, befindet, wobei dieser vertikale Block eine Schlagschere oder einen Querschneider (27) umfasst (44), der durch die Wirkung eines Kolbens (28) herabfällt und in seine Grundstellung zurückkehrt, und wobei die Fühlervorrichtung (29) ein Rad zur Änderungseinstellung (30) aufweist, mit dem der Abstand des Fühlers (29) zur Austrittsöffnung (21) und somit die Länge der vorgewärmten Stange eingestellt werden kann.

7. Maschine nach Anspruch 1, **dadurch gekennzeichnet, dass** die Verfahranordnung (15) für die vorgestanzten Stangensegmente das frisch abgeschnittene Segment aufnimmt und zur Position genau oberhalb des Untergesenks (36) verfährt, sodass das vorgestanzte Stangensegment perfekt in der Vertiefung im Gesenk positioniert wird, sobald es mittels Schwerkraft nach unten fällt, wobei der Verfahrschlitten (31) automatische Umkehrmittel umfasst, mit denen der Schlitten um 90° gedreht werden und so das vorgestanzte Stangensegment in seine Stellung im Untergesenk (36) gebracht werden kann.

8. Maschine nach Anspruch 1, **dadurch gekennzeichnet, dass** die Scheranordnung (12) und Verfahranordnung (15) mit Mitteln zur automatischen Ausführung einer Senkrechtbewegung bezüglich des Maschinenbettes (11) ausgestattet sind, sodass bei verändertem Durchmesser der zugeführten Stangen die Einstellung der Maschine (10) gewährleistet bleibt.

9. Maschine nach Anspruch 1, **dadurch gekennzeichnet, dass** Mittel zur Kühlung der werkzeughalter (38) vorhanden sind, die aus Durchgangsleitungen bestehen, in denen Öl oder eine ähnliche Flüssigkeit zirkuliert, sodass durch den Kontakt das Untergesenk (36) und das Obergesenk der Pressanordnung (14) ebenfalls gekühlt werden.

10. Maschine nach Anspruch 1, **dadurch gekennzeichnet, dass** an der Klemmvorrichtung Mittel zur automatischen Schmierung des Untergesenks (36) und des Obergesenks unter Verwendung von dosiertem Graphitöl angebracht sind, wobei zunächst das Untergesenk (36) versorgt wird, bevor der Positionierarm das vorgestanzte Stangensegment darauf absetzt, und anschließend daran das Obergesenk versorgt wird, und dadurch, dass Mittel zur Kontrolle der Parameter der Maschine (10) vorhanden sind, wie zum Beispiel die Temperatur im Inneren der Ofenkammern, die Oberflächentemperatur der Messingstangen kurz vor dem Abstanzen, die Verzögerungszeiten der Stanzstempel (52) oder die Bewegungsgeschwindigkeit der Stanzstempel (52), wobei diese Kontrollmittel einen Automaten zur Paramateränderung umfassen, der an einen Signalgeber angeschlossen ist, der zur Übertragung der vom Bediener ausgewählten Funktionen an den Automaten konzipiert ist.

## Revendications

1. Machine pour le formage à chaud de pièces en laiton par estampage alimenté par une barre de laiton de forme allongée, coupée en sections de barre de la même longueur appelées segments de barre prédécoupés, la machine de formage à chaud (10) comprenant les composants suivantes :
- un ensemble de four (12) conçu pour chauffer progressivement un ensemble de barres en laiton de sorte que la température de l'extrémité avant d'une barre de laiton entrant dans un ensemble de cisaillement (13) est de 700° C-900° C, le four (12) formé par quatre sous-chambres (18) qui composent une chambre commune (48) ouverte à l'avant pour l'entrée des barres, la chambre (48) ayant également un plateau sur lequel les barres de laiton reposent, deux parois latérales (20), une paroi arrière (47), et des moyens pour pousser automatiquement une barre de laiton vers un cisailleur (13) ;
- l'ensemble de cisaillement (13) conçu pour couper transversalement la barre de laiton préchauffée pour former des segments de barre prédécoupés d'une longueur prédéterminée, ledit ensemble de cisaillement incorporant un dispositif palpeur (29) placé dans la même direction que la barre chauffée, mais à une certaine distance à l'avant et en position horizontale ;
- un ensemble de déplacement (15) conçu pour déplacer le segment de barre prédécoupé vers une matrice inférieure (36), et formé par un chariot mobile allongé (31) entraîné par un servomoteur, qui se déplace transversalement de la direction de l'entrée de la barre chauffé à l'ensemble de cisaillement (13) ;
- un ensemble d'estampage à chaud (14) dédié à estamper le segment de barre prédécoupé avec la configuration prédéterminée, comprenant un ensemble de fermeture (53), une matrice supérieure et une inférieure (36) qui se logent l'une dans l'autre, la matrice inférieure (36) a trois poinçons (52) placés sur le même plan horizontal qui se déplace vers l'avant par l'action de vérins hydrauliques indépendants (35), qui régulent la pression et la force de chacun des poinçons (52), individuellement ; et
- un ensemble d'éjection conçu pour éjecter la pièce formée à l'extérieur de la machine (10) ; le tout monté sur un banc (11) ancré à la surface, **caractérisée en ce que** :
- l'ensemble de l'estampage à chaud (14) comprenant un ensemble de fermeture (53) activé par un vérin hydraulique vertical (34), qui génère le mouvement vertical vers le haut/vers le bas de l'ensemble de fermeture (53),
- le four (12) incorpore des brûleurs (16) placés à l'avant de la chambre commune (48) du four (12), se faisant face à l'intérieur et répartis le long du four (12), conçu pour chauffer progressivement toutes les barres, de sorte que la barre qui est prête à être introduite dans la cisaille (13) est la plus chaude, et ainsi successivement, les brûleurs (16) sont reliés à des vannes (46) qui régulent l'écoulement du carburant, et il y a des moyens électriques ou électroniques pour contrôler le température de la flamme de chacun des brûleurs (16), et le four (12) a une rampe d'alimentation (17) placée à l'extérieur du four (12) et avec une capacité pour un certain nombre de barres ; elle est légèrement inclinée vers le plateau du four et présente des butées (24) à l'intérieur pour éviter que les barres tombent ; il y a quelques pistons (25) reliés à la rampe d'alimentation (17), qui sont adaptés pour incliner ladite rampe d'alimentation et donc forcer la première barre à tomber par gravité vers le plateau du four,
- le dispositif palpeur (29) de l'ensemble de cisaillement (13), adapté pour se déplacer vers l'avant jusqu'à ce qu'il entre en contact avec l'avant de la barre chauffée à la longueur de découpe préétablie, puis se déplacer vers l'arrière à nouveau lorsque la coupe a été faite, pour permettre au segment de barre prédécoupé de passer à l'ensemble de l'estampage à chaud (14),
- le chariot mobile (31) comprend un bras de positionnement qui possède en son extrémité libre un creux en forme de demi-lune (49) dont le diamètre correspond au diamètre du segment de barre prédécoupé, qui est adapté pour maintenir le segment de barre prédécoupé dans le creux (49) et le fixer avec un cliquet et un ressort, et
- l'ensemble d'éjection de la pièce estampée comporte des éjecteurs dans la matrice inférieure (36), tandis que la matrice supérieure a une surface adhésive destinée à fixer la pièce estampée pour son expulsion, l'ensemble d'éjection comporte également un bras collecteur, qui est positionné sous la matrice supérieure, conçu de telle sorte que, quand la pièce estampée est attachée à la matrice supérieure, elle tombe sur le bras collecteur, qui se déplace vers la rampe d'évacuation grâce à des moyens de mouvement automatique, et permet au segment de barre prédécoupé de tomber sur cette rampe.

2. Machine conformément à la revendication 1, **caractérisée en ce que** le four (12) est approprié pour atteindre une température moyenne de 800°C.

3. Machine conformément à la revendication 1, **caractérisée en ce que** le four (12) a une capacité intérieure de 5-15 barres, placées les unes à côté des autres sur le plateau du four, de préférence le plateau du four peut contenir 8 barres de laiton.

4. Machine conformément à la revendication 1, **caractérisée en ce que** dans la paroi latérale avant du four (12) se trouve un orifice de sortie (21) à travers lequel les barres chauffées sont progressivement expulsées vers la cisaille (13).

5. Machine conformément à la revendication 1, **caractérisée en ce que** le four (12) a des moyens de mouvement automatique longitudinalement et également verticalement par rapport au banc (11), ce qui garantira le réglage de la machine (10) si le diamètre de la barre de laiton d'entrée est modifié.

6. Machine conformément à la revendication 1, **caractérisée en ce que** l'assemblage de cisaillement (13) est formé par un bloc vertical (44), qui est situé juste après l'orifice de sortie (21) du four (12) par lequel il est alimenté de la barre préchauffée, ce bloc vertical incorpore (44) une cisaille ou guillotine (27) qui tombe et revient à sa position initiale par l'action d'un piston (28), le dispositif palpeur (29) a une roue pour le réglage des ajustements (30) qui en tournant une distance prédéterminée ajuste la distance du palpeur (29) par rapport à l'orifice de sortie (21), et donc la longueur de la barre préchauffée.

7. Machine conformément à la revendication 1, **caractérisée en ce que** l'ensemble de mouvement (15) du segment de barre prédécoupé est adapté pour maintenir le segment de barre prédécoupé qui vient d'être découpé et le déplacer vers la position juste au-dessus de la matrice inférieure (36), de sorte que lorsque le segment de barre prédécoupé tombe par gravité, il est parfaitement positionné dans le creux de la matrice, le chariot mobile (31) incorpore des moyens automatiques pour tourner, adaptés pour tourner le chariot de 90° et ainsi positionner le segment de barre prédécoupé en position sur la matrice inférieure (36).

8. Machine conformément à la revendication 1, **caractérisée en ce que** l'ensemble de cisaillement (12) + l'ensemble de mouvement (15) auront des moyens de déplacement vertical automatique par rapport au banc (11), qui garantissent le réglage de la machine (10) si le diamètre de la barre de laiton d'entrée est modifié.

9. Machine conformément à la revendication 1, **caractérisée en ce que** il existe des moyens pour le refroidissement des porte-moules (38) formés par des passages à l'intérieur desquels circule de l'huile ou un fluide similaire, de sorte que par contact, la matrice inférieure (36) et celle supérieure de l'ensemble d'estampage (14) sont également refroidies.

10. Machine conformément à la revendication 1, **caractérisée en ce que** il existe des moyens pour lubrifier automatiquement la matrice inférieure (36) et celle supérieure par l'application d'huile de graphite dosée, qui sont montés sur le support, fourni à la matrice inférieure (36) juste avant que le bras de positionnement libère le segment de barre prédécoupé sur celle-ci, et il est ensuite appliqué sur la matrice supérieure, et il existe des moyens pour contrôler les paramètres de la machine (10), tels que la température à l'intérieur des chambres du four, la température de surface de la barre de laiton juste avant d'être découpée, les temps de retard des poinçons (52), ou la vitesse de déplacement des poinçons (52), ces moyens de contrôle comprennent un automate conçu pour modifier les paramètres, qui est relié à un dispositif de communication qui est conçu pour transmettre les fonctions choisies par l'utilisateur à l'automate.
